# EUROPEAN PATENT SPECIFICATION

(11) **EP 3 931 071 B1**
(45) Date of publication and mention of the grant of the patent: **18.01.2023**
(21) Application number: 20713741.5
(22) Date of filing: 26.02.2020
(51) Int. Cl.: B62J 15/00, B62J 15/02, B62K 19/38, B62K 25/28

(54) **MOTORCYCLE WITH REAR SUSPENSION COVER**
MOTORRAD MIT HINTERRADAUFHÄNGUNGSABDECKUNG
MOTOCYCLETTE AVEC PROTÈGE- SUSPENSION ARRIÈRE

(30) Priority: 27.02.2019 IT 201900002805
(43) Date of publication of application: 05.01.2022
(73) Proprietor: Piaggio & C. S.P.A., 56025 Pontedera Pisa (IT)
(72) Inventor: SANTUCCI, Mario Donato, 56025 Pontedera (Pisa) (IT); MARIOTTI, Valentino, 56025 Pontedera (Pisa) (IT)
(74) Representative: Carangelo, Pierluigi
(86) International application number: PCT/IB2020/051622
(87) International publication number: WO 2020/174410

(56) References cited:
- GB-A- 706 222
- JP-A- 2002 137 776

## Description

### TECHNICAL FIELD OF THE INVENTION

The present description concerns the technical field of motorcycles.

### BACKGROUND OF THE INVENTION

In motorcycles there is normally a rear suspension comprising a swingarm extending from the frame of the motorcycle to which a rear wheel is connected. A shock absorber is operatively interposed between the swingarm and the motorcycle frame. When the motorcycle is in use, the suspension, and especially the shock absorber, are normally exposed to dirt. Dirt may compromise the correct operation or at least the optimal operation of the suspension and shock absorber. This often forces motorcycle manufacturers to use suspensions and in particular shock absorbers with physical protection and surface treatments against dirt, which are thus more expensive, even when the same functionality could be guaranteed by a more economical shock absorber. Document GB706222 shows the preamble of claim 1.

A general object of the present description is to provide a motorcycle which is capable of correcting or reducing at least some of the drawbacks discussed above with reference to the prior art.

In particular, an object of the present invention is to provide a motorcycle that allows better protection from dirt of the rear suspension, and especially of the related shock absorber, with respect to the solutions of the prior art described above.

This and other objects are achieved by means of a motorcycle as defined in the accompanying claim 1 in its more general embodiment and in the dependent claims in some particular embodiments.

### BRIEF DESCRIPTION OF THE DRAWINGS

The invention will be better understood by the following detailed description of the embodiments thereof, made by way of example and therefore in no way restrictive, in relation to the accompanying drawings, wherein:

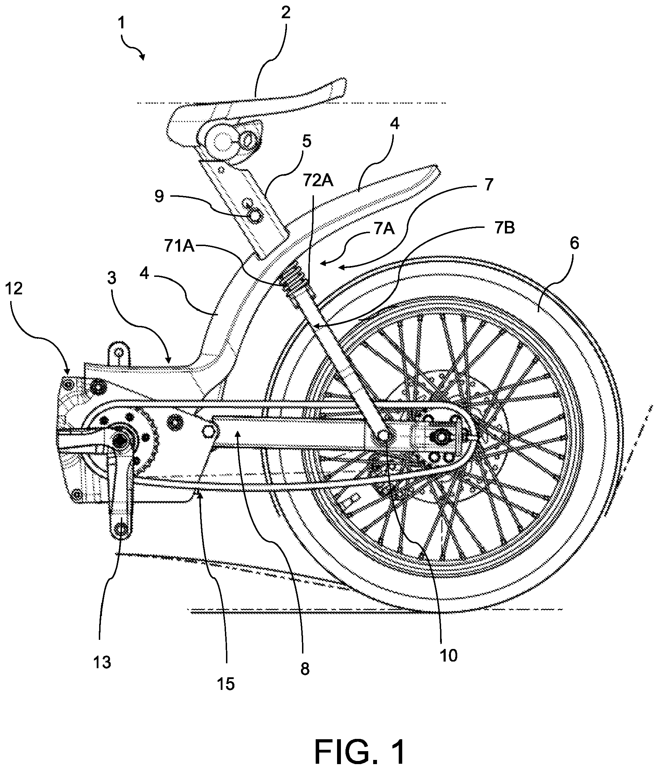

Fig.1 illustrates a partial side plan view of a motorcycle;

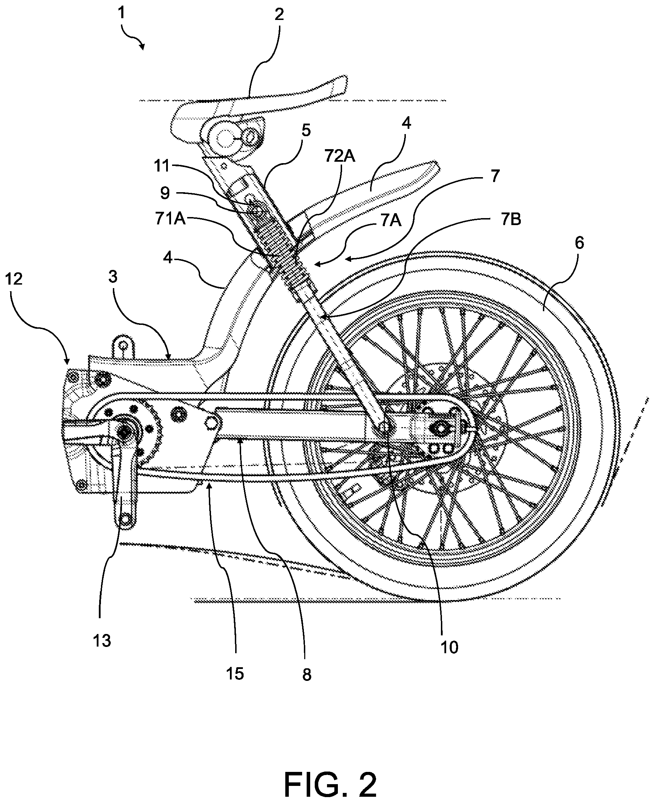

Fig.2 illustrates a partial side plan view similar to Fig.1 wherein the motorcycle is represented in partial cross-section.

### DETAILED DESCRIPTION

In the accompanying figures, identical or similar elements have been indicated at the same numerical references.

The accompanying figures show an embodiment of a transport vehicle and, in particular, of a motorcycle 1. In the particular example shown in the figures, the motorcycle 1 is realized, without introducing any limitation, as a scooter 1 and more preferably as a moped 1, comprising a saddle 2, a motorcycle frame 3 that preferably comprises aluminum and steel parts, a rear fender 4 integral to the frame 3 and a support portion 5 of the rear fender 4. The saddle 2 is supported by only the support portion 5. In other words, the saddle 2 is connected to the fender 4 only by means of the support portion 5, i.e. the support portion 5 is a protruding extension of the fender 4 that connects the saddle 2 to the fender 4.

According to a preferred embodiment, the support portion 5 is an at least partly hollow support portion. Preferably the support portion 5 is constructed as a tubular portion 5. In this way, the hollow support portion 5 may house a shock absorber 7 at least in part, as described in detail hereinafter. The shock absorber 7 is integrated in the support portion 5 and thus in the volume of the fender 4, thus reducing the overall dimensions. Alternatively, the support portion 5 may develop on one side of the fender 4. The fender 4 is in particular a structural element which, in addition to acting as a mudguard, also acts as a support for the support section 5; the latter may in effect be integrated into the fender itself or be arranged laterally.

The support portion 5 defines a structural attachment point for the shock absorber 7 that extends between the support portion and a swingarm 8. The solution of providing the support portion 5 makes it possible to eliminate additional structural elements that would otherwise be provided in order to create a stable support for the shock absorber and thus for the suspension of the vehicle. This solution instead eliminates dedicated structural elements for the shock absorber and thus reduces the weight and overall dimensions and thus makes it easier to optimize the functionality of the motorcycle.

Preferably, the fender 4 is made of deep drawn sheet metal. The fender 4 is preferably connected to the frame 3 in a removable way, preferably by screws.

In accordance with one embodiment, the motorcycle 1 further comprises a front wheel (not shown) and a rear wheel 6, a traction motor 12 and a steering handlebar (not shown) which is pivotally fixed to the frame 3 so that it may rotate around a steering axis. In accordance with an expedient embodiment, the frame 3 is a modular frame. In other words, the frame 3 preferably comprises a plurality of frame modules assembled together. In accordance with an expedient embodiment, the frame 3 comprises a first module, integral to the fender 4, which comprises the drive motor 12 and a second module (not shown) which is connected both to the steering handlebar and removably to the first module. Expediently, the modularity of the frame 3 allows the front and/or the rear part of the motorcycle to be modified, leaving the central motor attachment body unchanged. In this way it is advantageously possible to adapt the ergonomics to individuals of different stature and to vary the aesthetics of one of the modules without involving the others, thus reducing costs and investments.

In accordance with one embodiment, the motorcycle 1 comprises a pair of pedals 13 (only one of which is shown in the figures) operatively connected to the frame 3 on two opposite sides of the frame 3. In particular, the pedals 13 protrude laterally from two opposite sides of the motorcycle 1. Preferably, the pedals 13 are pedals similar to the pedals of a bicycle. More specifically, the pedals 13 are operatively connected to a drive wheel of the motorcycle 1 by means of an appropriate transmission system 15 whereby this drive wheel may be actuated. Preferably the drive wheel is the rear wheel 6. Where the motorcycle 1 is an electric motorcycle, the pedals 13 are primarily used in an emergency, for example when the battery charge of the motorcycle 1 is below the predetermined minimum charge level or when the motorcycle 1 must surmount a gradient greater than the design specification. In particular, the pedals 13 may be used by the user to contribute to the movement of the motorcycle 1.

It should be noted that for the purposes of the present description, the term 'motorcycle' must be considered in a broad sense, comprising in this definition also motorcycles having three wheels, e.g. two wheels paired and steered at the front and one drive wheel at the rear, or two wheels paired at the rear and one steered at the front, whether the motorcycle is tilting or not.

The drive motor 12 is directly or indirectly operatively connected to a drive wheel of the motorcycle 1, in the example, to the rear wheel 6. In accordance with a possible embodiment, the drive motor 12 is an electric motor 12. In accordance with an alternative embodiment, the drive motor 12 may be either an internal combustion engine or a hybrid motor.

The motorcycle 1 comprises a rear suspension 7,8. In accordance with one embodiment, the rear suspension includes a swingarm 8 and a shock absorber 7 or damped arm 7. In a manner known per se, the swingarm 8 is hinged to the frame 3 and is connected to the rear wheel 6. The shock absorber 7, which in the example is preferably a single shock absorber 7, is operatively interposed between the support portion 5 and the swingarm 8. Moreover, expediently the shock absorber 7 is partially received within the support portion 5. In this way the support portion 5 serves advantageously as a protective cover of the shock absorber 7. In accordance with an embodiment, the shock absorber 7 helps to support the saddle 2, the rider of the motorcycle 1 and a passenger, if any.

In the example shown, the rear suspension 7, 8 is a two-arm suspension and the swingarm 8 is thus realized as a swing fork 8. It should be noted, however, that the teachings of this description are also applicable to the case wherein the rear suspension 7,8 of the motorcycle 1 is a single-arm suspension.

In accordance with an embodiment, the shock absorber 7 comprises a first portion 7A hinged to a connection member 9 attached to the support portion 5. Preferably, the connection member 9 comprises a sleeve 9 extended within the support portion 5 which is screwed to this support portion 5. In particular the first portion 7A comprises a spring 71A and a damper 72A which are at least partially received within the support portion 5. This expedient has the advantage of reducing the exposure of the first portion 7A of the shock absorber 7 to dirt and weather. Moreover, due to this expedient, the support portion 5 constitutes in practice also a protection that physically prevents the user from being injured by coming into contact with a part of the shock absorber 7, for example by inserting his/her fingers or another part of the body between the coils of the spring 71A. In accordance with a preferred embodiment, the spring 71A and the damper 72A are received for about half of their longitudinal extension within the support portion 5. In accordance with an alternative embodiment, the spring 71A and the damper 72A are received completely or almost completely within the support portion 5. Moreover, the shock absorber 7 comprises a second portion 7B hinged to the swingarm 8. In the example the second portion 7B is a fork connection portion 7B. It should be noted, however, that the teachings of the present description are also applicable if the second portion 7B is a single-arm connection portion.

In accordance with an embodiment, the first and second portion 7A,7B of the shock absorber 7 are hinged via silentblocks 10,11 to the connection member 9 and the swingarm 8, respectively.

On the basis of what has been explained above, it is thus possible to understand how a motorcycle of the type described above may achieve the objects mentioned above with reference to the state of the art. In effect, as has been explained, due to a motorcycle according to the present description it is advantageously possible to obtain a better protection from dirt and weather of the rear suspension of the motorcycle with respect to the solutions described above with reference to the prior art, and in particular it is possible to cover at least partially the shock absorber, reducing the exposure thereof and ensuring greater cleanliness.

Without prejudice to the principle of the invention, the embodiments and the details of implementation may vary widely with respect to those described and illustrated purely by way of non-limiting example, without thereby departing from the scope of the invention as defined in the accompanying claims.

## Claims

1. Motorcycle (1) comprising:
a motorcycle frame (3);
a rear fender (4) integral with the motorcycle frame (3);
a saddle (2) supported only by a support portion (5) of the rear fender (4);
a rear suspension (7,8) comprising a swingarm (8) and a shock absorber (7), the shock absorber being operatively interposed between the support portion (5) and the swingarm (8);
wherein said support portion (5) is at least partially hollow and said shock absorber is at least partially arranged inside the support portion (5), **characterized by** said support portion (5) being a tubular portion.

2. Motorcycle (1) according to claim 1, wherein the shock absorber (7) comprises a first portion (7A) hinged to a connection member (9) fixed to the support portion (5) and a second portion (7B) hinged to the swingarm (8), wherein said first portion (7A) comprises a spring (71A) and a damper (72A), which are at least partially received within the support portion (5).

3. Motorcycle (1) according to claim 2, wherein the first and second portion (7A,7B) of the shock absorber (7) are hinged via silentblocks (10,11) to the connection member (9) and the swingarm (8), respectively.

4. Motorcycle (1) according to any of the preceding claims, wherein the rear fender (4) is made from a deep drawn metal sheet.

5. Motorcycle (1) according to any of the preceding claims, wherein the motorcycle frame (3) is a modular frame.

6. Motorcycle (1) according to claim 5, wherein the motorcycle frame (3) comprises a plurality of frame modules assembled together.

7. Motorcycle (1) according to any of the preceding claims, wherein the motorcycle (1) is a scooter, preferably a moped.

## Patentansprüche

1. Motorrad (1), umfassend:
einen Motorradrahmen (3);
einen hinteren Kotflügel (4), der integral mit dem Motorradrahmen (3) ist;
einen Sattel (2), der nur von einem Stützabschnitt (5) des hinteren Kotflügels (4) getragen wird;
eine Hinterradaufhängung (7, 8), die eine Schwinge (8) und einen Stoßdämpfer (7) umfasst, wobei der Stoßdämpfer betriebsfähig zwischen dem Stützabschnitt (5) und der Schwinge (8) angeordnet ist;
wobei der Stützabschnitt (5) mindestens teilweise hohl ist und der Stoßdämpfer mindestens teilweise innerhalb des Stützabschnitts (5) angeordnet ist, **dadurch gekennzeichnet, dass** der Stützabschnitt (5) ein röhrenförmiger Abschnitt ist.

2. Motorrad (1) nach Anspruch 1, wobei der Stoßdämpfer (7) einen ersten Abschnitt (7A), der an einem an dem Stützabschnitt (5) befestigten Verbindungselement (9) angelenkt ist, und einen an der Schwinge (8) angelenkten zweiten Abschnitt (7B) umfasst, wobei der erste Abschnitt (7A) eine Feder (71A) und einen Dämpfer (72A) umfasst, die zumindest teilweise innerhalb des Stützabschnitts (5) aufgenommen sind.

3. Motorrad (1) nach Anspruch 2, wobei der erste und der zweite Abschnitt (7A, 7B) des Stoßdämpfers (7) über Silentblöcke (10, 11) an dem Verbindungselement (9) beziehungsweise der Schwinge (8) angelenkt sind.

4. Motorrad (1) nach einem der vorhergehenden Ansprüche, wobei der hintere Kotflügel (4) aus einem tiefgezogenen Metallblech hergestellt ist.

5. Motorrad (1) nach einem der vorhergehenden Ansprüche, wobei der Motorradrahmen (3) ein modularer Rahmen ist.

6. Motorrad (1) nach Anspruch 5, wobei der Motorradrahmen (3) mehrere zusammengebaute Rahmenmodule umfasst.

7. Motorrad (1) nach einem der vorhergehenden Ansprüche, wobei das Motorrad (1) ein Roller, vorzugsweise ein Moped, ist.

## Revendications

1. Motocyclette (1) comprenant:
un cadre de motocyclette (3) ;
un garde-boue arrière (4) solidaire du cadre de motocyclette (3) ;
une selle (2) supportée uniquement par une partie de support (5) du garde-boue arrière (4) ;
une suspension arrière (7, 8) comprenant un bras oscillant (8) et un amortisseur (7), l'amortisseur étant fonctionnellement interposé entre la partie de support (5) et le bras oscillant (8) ;
dans laquelle ladite partie de support (5) est au moins partiellement creuse et ledit amortisseur est au moins partiellement agencé à l'intérieur de la partie de support (5), **caractérisée en ce que** ladite partie de support (5) est une partie tubulaire.

2. Motocyclette (1) selon la revendication 1, dans laquelle l'amortisseur (7) comprend une première partie (7A) articulée sur un organe de liaison (9) fixé à la partie support (5) et une seconde partie (7B) articulée au bras oscillant (8), dans laquelle ladite première partie (7A) comprend un ressort (71A) et un amortisseur (72A), qui sont au moins partiellement reçus à l'intérieur de la partie de support (5).

3. Motocyclette (1) selon la revendication 2, dans laquelle la première et la seconde partie (7A, 7B) de l'amortisseur (7) sont respectivement articulées par l'intermédiaire de supports élastiques (10, 11) sur l'organe de liaison (9) et sur le bras oscillant (8).

4. Motocyclette (1) selon l'une quelconque des revendications précédentes, dans laquelle le garde-boue arrière (4) est réalisé à partir d'une tôle emboutie.

5. Motocyclette (1) selon l'une quelconque des revendications précédentes, dans laquelle le cadre de motocyclette (3) est un cadre modulaire.

6. Motocyclette (1) selon la revendication 5, dans laquelle le cadre de motocyclette (3) comprend une pluralité de modules de cadre assemblés ensemble.

7. Motocyclette (1) selon l'une quelconque des revendications précédentes, dans laquelle la motocyclette (1) est un scooter, de préférence un cyclomoteur.
